# NEW EUROPEAN PATENT SPECIFICATION

(11) **EP 0 258 938 B2**
(45) Date of publication and mention of the opposition decision: **15.09.1999**
(45) Mention of the grant of the patent: 30.10.1991
(21) Application number: 87201609.2
(22) Date of filing: 26.08.1987
(51) Int. Cl.: A01J 7/00, A01J 5/017

(54) **An implement for milking animals**
Gerät zum Melken von Tieren
Dispositif de traite d'animaux

(30) Priority: 27.08.1986 NL 8602171; 27.08.1986 NL 8602172
(43) Date of publication of application: 09.03.1988
(73) Proprietor: MAASLAND N.V., 3155 PD Maasland (NL)
(72) Inventor: van der Lely, Ary, NL-Maasland (NL); van den Berg, Karel, NL-Bleskensgraaf (NL)
(74) Representative: Corten, Maurice Jean F.M.

(56) References cited:
- EP-A- 0 091 892
- EP-A- 0 091 892
- EP-A- 0 164 091
- EP-A- 0 191 517
- EP-A- 0 232 568
- WO-A-85/02973
- JP-A- 49 138 076
- US-A- 3 603 292
- US-A- 3 726 252
- US-A- 4 010 714
- "Mecanisation, informatisation et robotisation de la traite des vaches laitières" par J. B. Montalescot, Recueil de Médécine Vétérinaire, Juin - Juillet 1986
- "Robotisation des travaux agricoles", Bulletin Technique de Machinisme et de l'Equipement Agricoles, hors-série no. 4, 3ème trimestre 1986
- "melkwinning", consulentschap in algemene dienst voor melkwinning, melkhygiëne en boerenkaasbereiding, Wageningen 1978.

## Description

The invention relates to an implement for milking an animal.

A suchlike implement is known from US-A- 3,726,252. In the therein described implement the positioning and attachment means are handled manually. When, with the aid of the drive means and the flexible connection members, the teat cups are pulled off the teats and fall downwardly, they are hanging at the carrying means in an undefined position. From this position they can be connected to the teats again only by hand.

It is an object of the invention to overcome these disadvantages or at least to come to, in a certain extent, a more favourable construction. According to the invention this can be achieved by the features as described in claim 1. Within such a construction the connection member constitutes, after that the teat cup has been attached, a flexible connection between the teat cup and the attachment member, so that no mechanical forces can be passed on, and so that the risk of dislocation of the attachment or guiding member is strongly reduced.

In accordance with a further feature of the invention, the connection member is connected at its one end near the lower end of the teat cup and with its other end extends The drive means may be provided with a pneumatical cylinder, use being made of the vacuum source employed for the suction of the milk. In accordance with a still further feature of the invention, said drive means are provided in the attachment member, which attachment member is provided with a tubular member, near one end of which a teat cup is connected by means of the flexible connection member. According to the invention, the connection member is then arranged through at least part of the tubular member.

In accordance with a still further feature of the invention, the drive means for pulling the connection member are arranged at least partly in the tubular member.

In accordance with a still further feature of the invention, the contiguous parts of the teat cup on the one hand and the attachment member on the other hand are formed complementary in such a manner that the teat cup is brought to a speific position when the connection member is pulled, so that the said contiguous parts are set together. According to the invention, when the connection member is pulled, the teat cup is substantially in alignment with and at the end of an oblong portion of the attachment member. The oblong portion of the attachment member is then directed substantially upwardly, while the teat cup attached in alignment therewith also assumes a substantially vertical position, which is required for attachment thereof to the teat.

Furthermore, according to the invention, there is arranged about the connection member, between the teat cup and the attachment member, a bead-shaped element which, when the connection member is pulled, is accommodated in a recess of corresponding shape in the teat cup and the attachment member. Said connection member is then formed by a cord, e.g. of metal wire and/or synthetic material.

Also, according to the invention, the connection member may be formed by the milk tube and/or the pulsation tube. The milk tube and/or the pulsation tube is/are then arranged through the tubular member of the attachment member.

In accordance with a still further feature of the invention, the attachment member is provided with an elongate, axially slidable portion which from a position below a milking parlour floor is moved substantially axially towards a position wherein said slidable portion extends through an aperture in the floor to above said floor and near an animal's udder, the teat cup being connected to an end of said slidable portion via the connection member. The slidable portion may be of a tubular configuration. In accordance with a still further feature of the invention, the attachment member is supported pivotally capable of pivotal movement about at least two axes, which axes include an angle with the horizontal plane and which axes substantially intersect in the central portion of the aperture in the milking parlour floor, through which aperture the attachment member may extend. The attachment member is then supported by a first and a second frame portion, said first frame portion being pivotal about a first pivot axis and said second frame portion, to which the attachment member is connected, being connected pivotally about a second pivot axis to said first frame portion. In this connection, there may be provided means for bringing the attachment member in a predetermined position by pivoting about said pivot axes, which means may include stepper motors.

Furthermore, according to the invention, the slidable portion is slidable axially through a guide portion, and the slidable portion is seized near the other end by a drive member effecting the axial movement. Said drive member is provided with a screw spindle unit, the length of which can be controlled by means of an electrical signal, e.g. by means of a potentiometer measuring the length of the screw spindle unit.

Furthermore, in accordance with a still further feature of the invention, the displacement of the slidable portion by means of the lever action of a rod system may be greater than the change in length of the screw spindle unit.

According to the invention, the teat cup is attached to a teat of an animal's udder by pivoting the attachment in a predetermined position and sliding the axially slidable portion over a predetermined distance, so that the teat cup arranged near an end of the slidable portion slides over the teat op the animal's udder. After the teat cup has been connected to the teat by means of a vacuum applied therein, the attachment member is retracted somewhat, whereafter the connection between the teat cup and the attachment member is constituted by the flexible connection member.

According to the invention, there may be provided one or more apertures in the milking parlour floor, through each of which apertures may extend an attachment member, said apertures being arranged in a raised portion relative to the floor, whereby the animal stands with her hindlegs on both sides of said raised portion.

In accordance with a still further feature of the invention, a teat cup is brought in a reversed position having its opening directed downwardly by relaxing the connection member. This may be of importance when the implement is in the non-operative condition and in order to avoid contamination of the teat cup or in order to drain superfluous liquid form the teat cup after cleaning thereof. Furthermore, according to the invention, the milk tube and the pulsation tube may be designed at least partly coaxially.

Furthermore, the invention relates to an implement for milking animals, wherein a teat cup is attached to a teat of the animal's udder by means of an attachment member capable of movement from a position substantially below a miking parlour floor to a position wherein said member extends upwardly through an aperture in or near said floor to near the animal's udder. With such an implement, a plurality of parts are located below the milking parlour floor, thus causing a sensitivity to contamination. It is of importance to have a proper screening off between the milking parlour and said milking implement parts, in which connection the openings therebetween should be of a minimum size.

The invention contemplates an implement for milking animals, wherein the means for attaching the teat cups are of a simple and effective construction.

For this purpose, according to the invention, the attachment member is supported pivotally capable of pivotal movement about at least two axes, whih axes include an angle with the horizontal plane and which axes substantially intersect in the central portion of the aperture, through which the attachment member may extend. In this manner it will suffice for the aperture to be comparatively small, while the attachment member may extend therethrough in various directions.

Furthermore, according to the invention, the attachment member is supported by a first and a second frame portion, said first frame portion being pivotal about a first pivot axis and said second frame portion, to which the attachment member is connected, being connected pivotally about a second pivot axis to said first frame portion. Furthermore, according to the invention, there may be present means for bringing the attachment member in a predetermined position by pivoting about said pivot axes, which means may include stepper motors.

In accordance with a further feature of the invention, the attachment member is provided with an axially slidable portion, near the end of which there is arranged a teat cup. In this manner the attachment member having the teat cup at its end may be moved upwardly through the aperture in the floor to near the animal's udder.

In accordance with a still further feature of the invention, the slidable portion is slidable axially through a guide portion, and the slidable portion is seized near the other end, at the lower side, by a drive member effecting the axial movement. In accordance with a still further feature of the invention, said drive member is provided with a screw spindle unit, the length of which can be controlled by means of an electrical signal. In this connection, the displacement of the slidable portion by means of a lever action of a rod system may be greater than the change in length of the screw spindle unit, as a result of which a comparatively quick displacement of the attachment member is effected. In practice it has been found that, in spite of the lever action, the accuracy of the displacement of the attachment member is sufficiently great.

In accordance with a still further feature of the invention, a teat cup is attached to a teat of an animal's udder by pivoting the attachment member in a predetermined position and sliding the axially slidable portion over a predetermined distance, so that the teat cup arranged near an end of the slidable portion slides over a teat of the animal's udder.

Furthermore, according to the invention, there are provided one or more apertures, through each of which extends an attachment member, said apertures being arranged in a raised portion relative to the floor, whereby the animal stands with her hindlegs on both sides of said raised portion.

According to the invention, there is provided in the raised portion a sensor for determining the position of the udder and/or one or more of the teats. Said sensor is arranged in or below an aperture in said raised portion.

In accordance with a still further feature of the invention, the sensor is capable of pivoting in order to scan the udder for the establishment of the position of an udder. The sensor emits a sonic signal, so that the distance to any surface reflecting said sonic signal can be established.

In accordance with a still further feature of the invention, the attachment member with its support is capable of movement in the longitudinal direction relative to the animal.

Furthermore, according to the invention, the axially slidable portion may be tubular, and the milk tube and/or the pulsation tube may extend, at least partly, through said tubular portion.

In accordance with a still further feature of the invention, there is provided a flexible connecting member connecting the teat cup to the end of the said axially slidable portion. Said connection member is attached at one end to the teat cup and with the other end is so passed through the slidable portion that the teat cup is spaced apart from the slidable portion when the connection member is in a relaxed state while the teat cup is pulled against the end of the slidable portion when the connection member is pulled. In this connection there may be arranged means for pulling the connection member in said slidable portion, preferably at the end of the slidable portion facing away from the teat cup.

In accordance with a still further feature of the invention, the contiguous parts of the teat cup on the one hand and the slidable portion on the other are formed complementary in such a manner that the teat cup is brought to a specific position when the connection member is pulled. In this connection, when the connection member is pulled, the teat cup is substantially in alignment with the elongate slidable portion.

Furthermore, according to the invention, there is arranged about the connection member, between the teat cup and the slidable portion, a bead-shaped element which, when the connection member is pulled, is accommodated in a recess of corresponding shape between the teat cup and the slidable portion.

According to the invention, said connection member is formed by a cord, e.g. of metal wire and/or synthetic material. The connection member may also be formed by the milk pipe and/or the pulsation pipe, which may be designed coaxially.

For a better understanding of the invention and to show how the same may be carried into effect, reference will now be made, by way of example, to some embodiments shown in the drawings, in which:
Figure 1 shows an animal located in the milking parlour;
Figure 2 is a plan view of part of the milking implement, taken on the line II - II in Figure 1;
Figure 3 is a partial view, taken on the line III - III in Figure 2;
Figure 4 is a partial view, taken on the line IV -IV in Figure 2;
Figure 5 is a partial view of an attachment member, and
Figure 6 is a view of a second embodiment of an attachment member.

In the various drawings, which are only schematical renderings, corresponding parts are indicated by the same reference numerals.

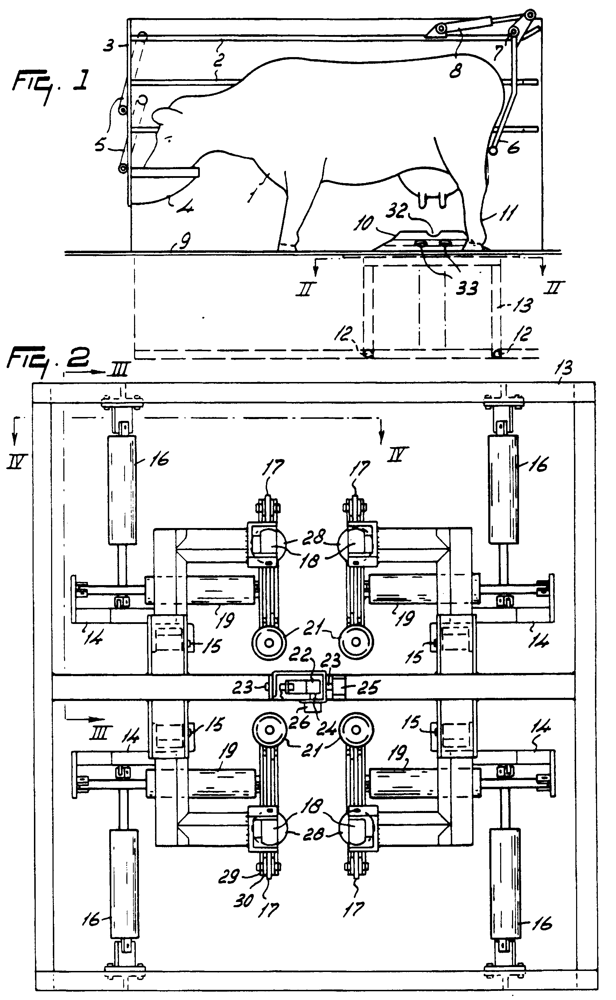

The animal shown in Figure 1 is located in a milking parlour. Said milking parlour is a space confined by guide rods 2, as a result of which the animal 1 enjoys only a limited freedom of movement in the laterial direction. At its front side, the milking parlour is provided with a hingeable boundary 3, to which is attached a manger 4 and which by means of pivot arms 5 can be moved to above the level of the animal 1. The animal 1 can leave the milking parlour in the forward direction. Near the rear side of the animal 1, there is arranged a positioning arm 6 which can pivot about pivot shaft 7 and can be driven by operating cylinder 8, e.g. a pneumatical cylinder, using the vacuum present for the milking operation.

When the positioning arm 6 is pivoted upwardly, the animal can enter the milking parlour by moving forwardly, she being inclined to proceed so far that her head reaches to near the manger 4. In order to ensure that the animal proceeds to a sufficient extent and, in addition, in order to limit the animal's freedom of movement in the longitudinal direction, the pivot arm 6 can subsequently be pivoted downwardly to near the rear end of the animal.

Below the floor 9 of the milking parlour is situated the milking implement portion which attends to the automatic attachment of the teat cups. In Figure 1 this has been indicated only roughly, a raised portion 10 present below the animal's udder extending to above the floor 9. The hindlegs 11 of the animal 1 are located on both sides of the raised portion 10, which reaches through a longitudinally elongate aperture in the milking parlour floor 9. The milking implement portion arranged below the floor 9 is capable of a slight movement by means of guide wheels 12, so that the raised portion 10, at least in the longitudinal direction of the animal, can be moved to such an extent that it is positioned approximately directly below the udder.

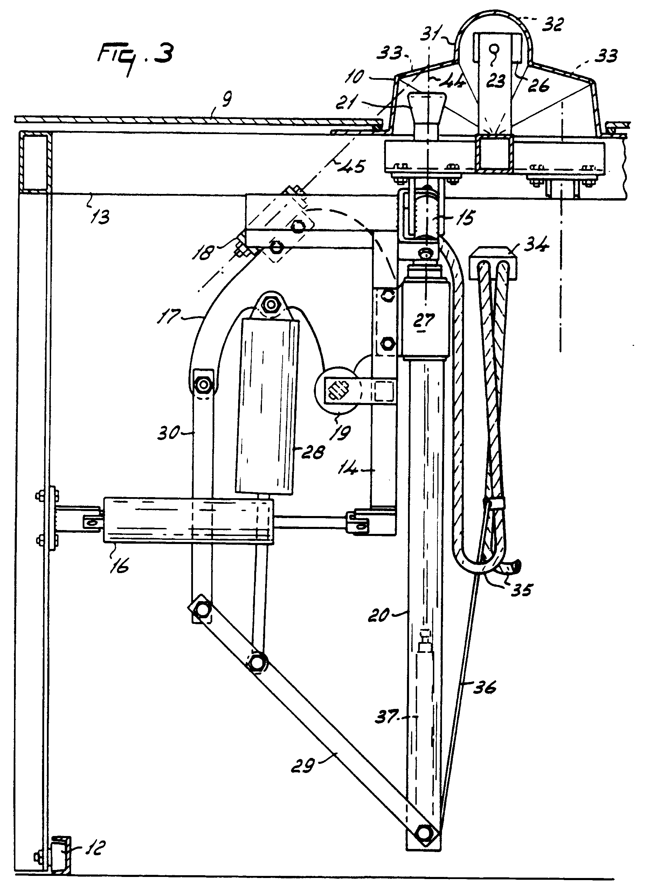

Figure 2 shows, in a plan view, the apparatus for the automatic attachment of the teat cups as is situated below the floor 9 in Figure 1. The apparatus is mounted in a frame 13 which is capable of movement in the longitudinal direction of the milking parlour. In the frame 13 there is arranged a first frame portion 14 which by means of pivot 15 is suspended pivotally in said frame 13. Pivot 15 is situated obliquely to the plane of the drawing in Figure 2. The pivotal movement of the first frame portion 14 about pivot 15 is effected by means of a drive member 16 which at one end is suspended in the frame 13 and at the other end is connected to the first frame portion 14. The apparatus furthermore comprises a second frame portion 17 which by means of pivot 18 is connected to the first frame portion 14. The pivotal movement of the second frame portion relative to the first frame portion is effected by a drive member 19 which at one end is connected to the second frame portion 17 and at the other end to the first frame portion 14. The second frame portion 17 comprises an axially movable attachment member 20 (Figure 3) carrying at its top end a teat cup 21.

As is apparent from Figure 2, the implement according to the embodiment comprises four attachment members, each of which is supported by a second frame portion 17 and a first frame portion 14. By energizing the drive means 16 and 19, each of the attachment members can be brought in a desired position.

In Figure 2 there is furthermore shown a sensor 22, which sensor by means of a sonic signal is capable of measuring the distance to an object. The sensor 22 is pivotal about two axes 23 and 24 which are perpendicular relative to each other, said pivotal movement being effected by means of the electric motors 25 and 26. In this manner the sensor 22 can determine the distance to the animal's udder in various directions, so that the position of the udder's teats can be established. In this connection, the end of a teat is recognized by the sensor 22 because an object is perceived, the distance from which to the sensor is less than that of parts of the udder that are situated near said teat end.

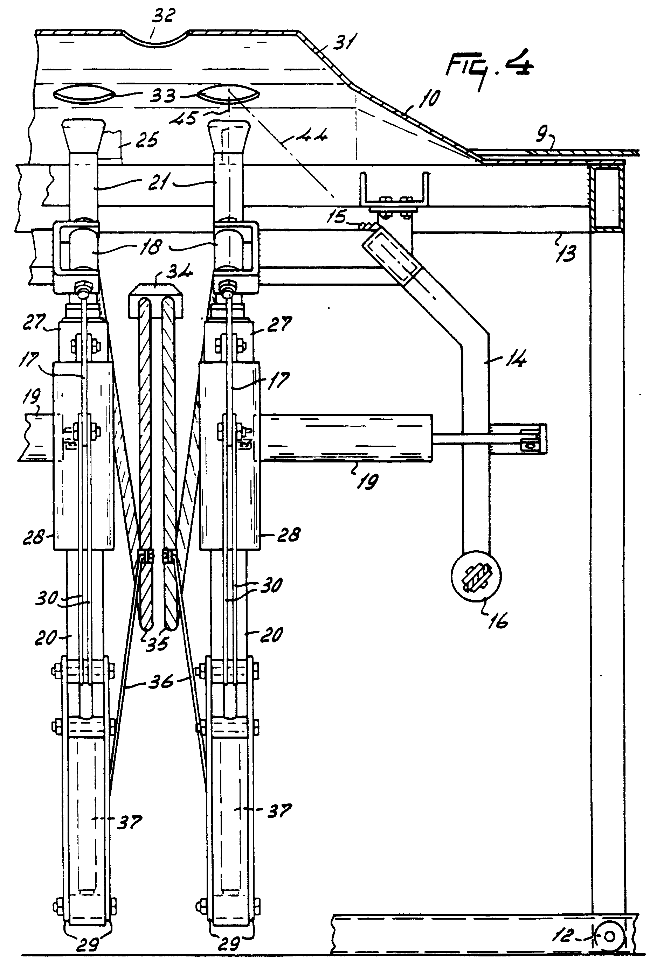

Figures 3 and 4 show the apparatus for the attachment of the teat cups in further detail. The axially slidable attachment member 20 is slidable through guide portion 27, which guide portion 27 is mounted on the second frame portion 17. The axial movement of the attachment member 20 through the guide portion 27 is effected by means of drive member 28 which at one end is connected to the second frame portion 17 and at the other end to a lever 29. The lever 29 is connected at one end to the end of the attachment member 20 and at the other end to the end of a connection rod 30 connected to the second frame portion 17. It will be obvious that, when the drive member 28 is energized, the axial position of the attachment member 20 can be set, namely in such a manner that upon a certain lengthening of drive member 28 a much greater displacement of the attachment member is effected as a result of the lever action of lever 29. The drive member 28 is, for example, of the type provided with a spindle, an electric motor and a potentiometer, by means of which the change in length can be set accurately. Since it may be of importance for the teat cup to be attached as quickly as possible after detection of the teat, the rate at which drive member 28 acts is increased by means of lever 29. In Figures 3 and 4 the attachment member 20 is shown in the lowermost position, while the teat cup 21 arranged at the top end is situated below a covering hood 31, which covering hood 31 constitutes the raised portion 10 of the floor 9 in Figure 1. Consequently, the covering hood 31 reaches upwardly through an elongate aperture in the milking parlour floor to between the hindlegs 11 of the animal 1.

In the covering hood 31 there are provided a plurality of apertures 32, 33. Aperture 32 is situated above the sensor 22, so that the lower side of the animal, in particular the udder, gets within the measuring range of the sensor. Furthermore there is provided for each attachment member an aperture 33, through which it may extend when it moves upwardly. The apertures 32, 33 may be provided with a cover, e.g. a slidable lid or the like. The apertures 33 may also be provided with a flexible flap, which is pushed aside by the attachment member when it extends therethrough.

As is apparent from Figures 3 and 4, the axes 44 and 45 of the pivots 15 and 18, respectively, go through the central portion of the aperture 33, through which the relevant attachment member may extend. Owing to this construction, the attachment member is always situated approximately in the middle of the aperture when pivoting about the pivots 15 and 18, so that the apertures 33 may be comparatively small.

Between the attachment members 20 shown in Figures 3 and 4 there is situated the milking claw 34 which by means of line 35 is connected to the teat cup 21. Line 35 is, for example, the milk tube or a combination of the milk tube and the pulsation tube. In order to slightly guide the line 35 during the axial movement of the attachment member 20, a connection cord 20 is arranged between the lower end of the attachment member 20 and said line 35. As a result thereof, the line 35 is partly pulled along upon downward movement of attachment member 20.

The drawings, in particular Figures 3 and 4, fail to show the lines required for operating the drive members 16, 19 and 28 as well as other lines, such as the one to the sensor and that for the discharge of the milk.

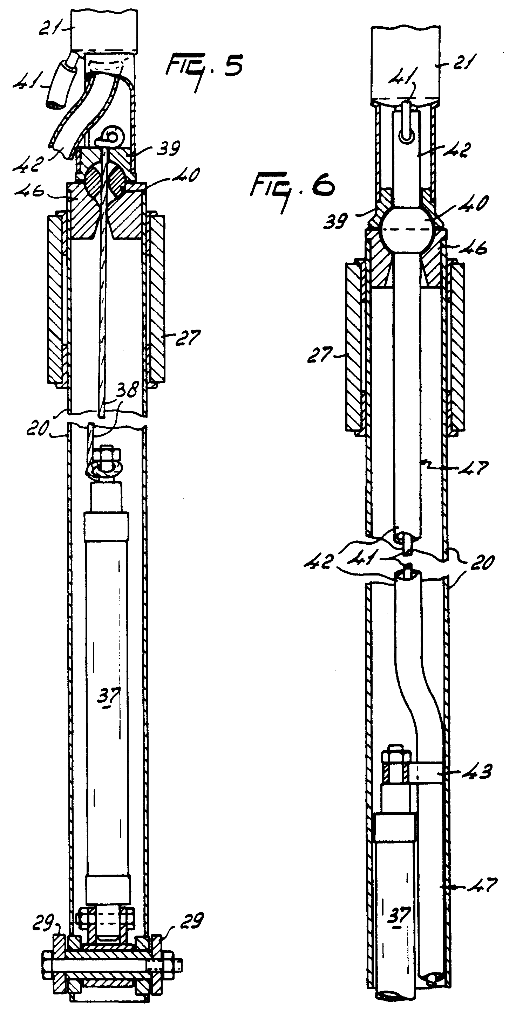

Figure 5 shows a first embodiment of the attachment member with the teat cup connected thereto. The attachment member 20 consists of a metal tube connected at its lower side to lever 29. At said lower side is also attached a pneumatical cylinder 37, at the other side of which there is arranged a flexible connection member 38, e.g. a cord. The other end of the flexible connection member 38 is connected to the lowermost portion 39 of the teat cup 21. It will be obvious that thus the teat cup is pulled against the of the attachment member 20 when the connection member 38 is tensioned. The tension in the connection member can be removed by lengthening of pneumatical cylinder 37, as a result of which the teat cup may be located at some distance from the attachment member. About the connection member 38 there is arranged a bead-shaped element 40, the shape of which corresponds on the one hand to a recess in the lowermost portion 39 of the teat cup and on the other to a recess in the top side 46 of the attachment member. The presence of the bead-shaped element 40 facilitates the proper positioning of teat cup 21 when the connection member 38 is pulled by cylinder 37. Furthermore are shown in Figure 5 the pulsation tube 41 and the milk tube 42.

Figure 6 shows a second embodiment of the attach ment member, in which the milk tube and/or the pulsation tube is/are conducted through the tubular attachment member. This combined line 47 also constitutes the flexible connection member between the teat cup and the drive member, about which there is also provided the bead-shaped element 40. The line 47 is connected to the top end of the pneumatical cylinder 37 by means of clamp 43.

The implement for milking animals operates as follows. After the animal, e.g. a cow, has entered the milking parlour and is located in the desired position, the frame 13 can be moved forwardly or rearwardly in order to come approximately in the middle below the animal's udder. In this connection, it is possible to use a so-called cow recognition system, according to which e.g. by means of a transmitter on the animal's collar it is perceived which animal is present in the milking parlour, in consequence of which the movement of the frame in the longitudinal direction can be effected. It is equally possible, in dependence on this information, to deposit a desired amount of fodder in the manger 4, which can all be done automatically, whether or not controlled by a central computer system. When the frame 13 is in the proper position below the udder, the sensor 22 can scan the udder in order to establish the positions of the teats. In this connection, the end of a teat can be recognized by the comparatively shorter distance to the sensor than that from parts surrounding said teat end to the sensor. As soon as the sensor has established the spacial position of a teat, an attachment member 20 can be brought in the proper position by means of drive members 16 and 19, whereafter the attachment member having at its end the teat cup 21 is pushed upwardly over a specific distance by energizing drive member 28. The teat cup 21 pulled against the end of the attachment member by means of connection member 38 is then moved through aperture 33 to the relevant teat, whereafter the teat cup by means of the vacuum generated therein is attached to said teat. Subsequently, pneumatic cylinder 37 is energized such that the connection member 38 is relaxed and the teat cup 21 may be located at some distance from the attachment member, whereafter the attachment member is moved slightly downwardly. As a result there is produced a freedom of movement for the teat cup, which is required when the animal moves slightly or when the shape of the udder changes due to the decrease of the quantity of milk present.

All the teat cups can be attached consecutively as described, the various actions overlapping each other in time. For example, the sensor can already search for the following teat during the movement of the teat cup 21 towards the earlier found teat.

After the milking operation, the teat cup can be withdrawn from the teat by pulling of the connection member 38, whereby the teat cup is pulled again in the specific position against the attachment member 20. Subsequently, the teat cup 21 can be brought again to a position below the milking parlour floor. In order to avoid contamination of the teat cup, it is possible, e.g. when the teat cup is situated below the milking parlour floor, to completely or partly relax the connection member 38, so that the open portion of the teat cup can be directed downwardly.

## Claims

1. An implement for milking an animal (1), such as a cow, provided with teat cups (21) and with a positioning and attachment means for individually bringing and subsequently attaching the teat cups to the respective teats of the animal's udder, the positioning and attachment means comprising for each teat cup a carrying means (14, 17, 20) for carrying one teat cup and a moving means (16, 19, 28) for moving the teat cup automatically to the respective teat, each carrying means comprising an attachment member (20) carrying the respective teat cup, a flexible connection member (38 or 47) being provided for each teat cup, each teat cup being connected to the positioning and attachment means by the respective flexible connection member to form a flexible connection during milking, a drive means (37) being provided for each teat cup which drive means is connected to the respective teat cup by means of the flexible connection member (38), each drive means (37), after attachment of the teat cup to the respective teat, being energized to relax the flexible connection member so as to form said flexible connection, so that each teat cup, during milking, is spaced apart from the attachment member, while after milking each drive means (37) being energized to pull by means of the flexible connection member the respective teat cup towards and against the attachment member in a predetermined position.

2. An implement as claimed in claim 1, characterized in that the connection member (38) is connected at its one end near the lower end of the teat cup (21) and with its other end extends through an aperture in the attachment member (20).

3. An implement as claimed in claim 1 or 2, characterized in that the drive means (37) are provided with a pneumatic cylinder.

4. An implement as claimed in claim 3, characterized in that the pneumatic cylinder (37) is connectable to the vacuum source employed for the suction of the milk.

5. An implement as claimed in claim 3 or 4, characterized in that the drive means (37) are provided in the attachment member (20).

6. An implement as claimed in any one of the preceding claims, characterized in that the attachment member (20) is provided with a tubular member, near one end of which a teat cup (21) is connected by means of the flexible connection member (38).

7. An implement as claimed in claim 6, characterized in that the connection member (38) is arranged through at least part of the tubular member.

8. An implement as claimed in claim 7, characterized in that the drive means (37) for pulling the connection member (38) are arranged at least partly in the tubular member.

9. An implement as claimed in any one of the preceding claims, characterized in that the contiguous parts of the teat cup (21) on the one hand and the attachment member (20) or the other are formed complementary in such a manner that the teat cup (21) is brought to a specific position when the connection member (38) is pulled.

10. An implement as claimed in any one of the preceding claims, characterized in that, when the connection member (38) is pulled, the teat cup (21) is substantially in alignment with and at the end of an oblong portion of the attachment member (20).

11. An implement as claimed in any one of the preceding claims, characterized in that there is arranged about the connection member (38), between the teat cup (21) and the attachment member (20), a bead-shaped element (40) which, when the connection member is pulled, is accommodated in a recess of corresponding shape between the teat cup (21) and the attachment member (20).

12. An implement as claimed in any one of the preceding claims, characterized in that the connection member (38) is formed by a cord, e.g. of metal wire and/or synthetic material.

13. An implement as claimed in any one of the preceding claims, characterized in that the connection member (38) is formed by the milk tube (42) and/or the pulsation tube (41).

14. An implement as claimed in any one of claims 6 to 13, characterized in that the milk tube (42) and/or the pulsation tube (41) is/are arranged through the tubular member.

15. An implement as claimed in any one of the preceding claims, characterized in that the attachment member (20) is provided with an elongate, axially slidable portion which from a position below a milking parlour floor (9) is moved substantially axially towards a position wherein said slidable portion extends through an aperture (33) in the floor to above said floor (9) and near an animal's udder, the teat cup (21) being connected to an end of said slidable portion via the connection member (38).

16. An implement as claimed in claim 15, characterized in that said slidable portion is of a tubular configuration.

17. An implement as claimed in claim 15 or 16, characterized in that the attachment member (20) is supported pivotally capable of pivotal movement about at least two axes (15, 18), which axes (15, 18) include an angle with the horizontal plane and which axes (15, 18) substantially intersect in the central portion of the aperture (33) in the milking parlour floor (9).

18. An implement as claimed in claim 17, characterized in that the attachment member (20) is supported by a first (14) and a second (17) frame portion, said first frame portion (14) being pivotal about a first pivot axis (15) and said second frame portion (17), to which the attachment member (20) is connected, being connected pivotally about a second pivot axis (18) to said first frame portion (14).

19. An implement as claimed in claim 17 or 18, characterized by means for bringing the attachment member (20) in a predetermined position by pivoting about said axes (15, 18).

20. An implement as claimed in claim 19, characterized in that said means include stepper motors.

21. An implement as claimed in any one of claims 15 to 20, characterized in that the slidable portion is slidable axially through a guide portion (27), and that the slidable portion is seized near the other end by a drive member (28) effecting the axial movement.

22. An implement as claimed in claim 21, characterized in that said drive member (28) is provided with a screw spindle unit, the length of which can be controlled by means of an electrical signal.

23. An implement as claimed in claim 22, characterized in that the displacement of the slidable portion by means of the lever action of a rod system (29, 30) is greater than the change in length of the screw spindle unit.

24. An implement as claimed in any one of the preceding claims, characterized in that there are provided one or more apertures (33), through each of which apertures (33) may extend an attachment member (20), said apertures being arranged in a raised portion relative to the floor (9), whereby the animal stands with her hindlegs on both sides of said raised portion.

25. An implement as claimed in any one of the preceding claims, characterized in that a teat cup (21) is brought in a reversed position having its opening directed downwardly by relaxing the connection member (38).

26. An implement as claimed in any one of the preceding claims, characterized in that the milk tube (42) and the pulsation tube (41) are designed at least partly coaxially.

27. An implement as claimed in claims 11 to 26, characterized in that the bead-shaped element (40) is substantially globular.

## Patentansprüche

1. Vorrichtung zum Melken eines Tieres (1), beispielsweise einer Kuh, mit Zitzenbechern (21) sowie mit einer Positionier- und Anschluß-Einrichtung, um die Zitzenbecher einzeln an die jeweiligen Zitzen des Tiereuters zu verbringen und anschließend anzubringen, wobei die Positionier- und Anschluß-Einrichtung für jeden Zitzenbecher eine Trageinrichtung (14, 17, 20) zum Tragen eines Zitzenbechers und eine Einrichtung (16, 19, 28) zum automatischen Bewegen des Zitzenbechers an die zugehörige Zitze aufweist, wobei jede Trageinrichtung ein den jeweiligen Zitzenbecher tragendes Anschlußglied (20) aufweist, wobei ein flexibles Verbindungsglied (38 oder 47) für jeden Zitzenbecher vorgesehen ist, wobei jeder Zitzenbecher durch das jeweilige flexible Verbindungsglied mit der Positionier- und Anschluß-Einrichtung verbunden ist, so daß während des Melkens eine flexible Verbindung gebildet ist, wobei für jeden Zitzenbecher ein Antrieb (37) vorgesehen ist, der mittels des flexiblen Verbindungsgliedes (38) mit dem zugehörigen Zitzenbecher verbunden ist, wobei jeder Antrieb (37) nach dem Anbringen des Zitzenbechers an die zugehörige Zitze eingeschaltet wird, um das flexible Verbindungsglied zur Bildung der flexiblen Verbindung zu entlasten, so daß jeder Zitzenbecher während des Melkens in einem Abstand von dem Anschlußglied angeordnet ist, während jeder Antrieb (37) nach dem Melken eingeschaltet wird, um mittels des flexiblen Verbindungsgliedes den jeweiligen Zitzenbecher in Richtung auf und gegen das Anschlußglied in eine vorgegebene Position zu ziehen.

2. Vorrichtung nach Anspruch 1,
dadurch gekennzeichnet, daß das Verbindungsglied (38) mit seinem einen Ende nahe dem unteren Ende des Zitzenbechers (21) angebracht ist, und daß sich sein anderes Ende durch eine Öffnung im Anschlußglied (20) hindurch erstreckt.

3. Vorrichtung nach Anspruch 1 oder 2,
dadurch gekennzeichnet, daß der Antrieb (37) einen pneumatischen Zylinder aufweist.

4. Vorrichtung nach Anspruch 3,
dadurch gekennzeichnet, daß der pneumatische Zylinder (37) an die zum Absaugen der Milch vorhandene Vakuumquelle anzuschließen ist.

5. Vorrichtung nach Anspruch 3 oder 4,
dadurch gekennzeichnet, daß sich der Antrieb (37) in dem Anschlußglied (20) befindet.

6. Vorrichtung nach einem der vorhergehenden Ansprüche,
dadurch gekennzeichnet, daß das Anschlußglied (20) ein Rohr aufweist, nahe dessen einem Ende ein Zitzenbecher (21) mittels des flexiblen Verbindungsgliedes (38) befestigt ist.

7. Vorrichtung nach Anspruch 6,
dadurch gekennzeichnet, daß das Verbindungsglied (38) innerhalb mindestens eines Teiles des Rohres angeordnet ist.

8. Vorrichtung nach Anspruch 7,
dadurch gekennzeichnet, daß der Antrieb (37) zum Ziehen des Verbindungsgliedes (38) mindestens teilweise in dem Rohr angeordnet ist.

9. Vorrichtung nach einem der vorhergehenden Ansprüche,
dadurch gekennzeichnet, daß die benachbarten Teile des Zitzenbechers (21) einerseits und des Anschlußgliedes (20) andererseits komplementär gestaltet sind, derart, daß der Zitzenbecher (21) beim Ziehen des Verbindungsgliedes (38) in eine bestimmte Position gelangt.

10. Vorrichtung nach einem der vorhergehenden Ansprüche,
dadurch gekennzeichnet, daß der Zitzenbecher (21) beim Ziehen des Verbindungsgliedes (38) im wesentlichen fluchtend mit und an dem Ende eines langgestreckten Teiles des Anschlußgliedes (20) ausgerichtet ist.

11. Vorrichtung nach einem der vorhergehenden Ansprüche,
dadurch gekennzeichnet, daß das Verbindungsglied (38) zwischen dem Zitzenbecher (21) und dem Anschlußglied (20) von einem wulstartig geformten Element (40) umfaßt ist, das sich beim Ziehen des Verbindungsgliedes in eine entsprechend geformte Ausnehmung einpaßt, die sich zwischen dem Zitzenbecher (21) und dem Anschlußglied (20) befindet.

12. Vorrichtung nach einem der vorhergehenden Ansprüche,
dadurch gekennzeichnet, daß das Verbindungsglied (38) ein Seil ist, zum Beispiel aus Metalldraht und/oder aus Kunststoff.

13. Vorrichtung nach einem der vorhergehenden Ansprüche,
dadurch gekennzeichnet, daß das Verbindungsglied (38) durch den Milchschlauch (42) und/oder den Pulsschlauch (41) gebildet ist.

14. Vorrichtung nach einem der Ansprüche 6 bis 13,
dadurch gekennzeichnet, daß der Milchschlauch (42) und/oder der Pulsschlauch (41) durch das Rohr hindurchgeführt sind.

15. Vorrichtung nach einem der vorhergehenden Ansprüche,
dadurch gekennzeichnet, daß das Anschlußglied (20) ein langgestrecktes, axial verschiebliches Teil aufweist, das von einer Position unterhalb des Melkstandbodens (9) im wesentlichen axial in eine Position bewegbar ist, in der es sich durch eine Öffnung (33) im Boden hindurch bis oberhalb des Bodens (9) in die Nähe eines Tiereuters erstreckt, und daß der Zitzenbecher (21) über das Verbindungsglied (38) mit einem Ende des verschieblichen Teiles verbunden ist.

16. Vorrichtung nach Anspruch 15,
dadurch gekennzeichnet, daß das verschiebliche Teil rohrförmig ist.

17. Vorrichtung nach Anspruch 15 oder 16,
dadurch gekennzeichnet, daß das Anschlußglied (20) um mindestens zwei Achsen (15, 18) schwenkbar abgestützt ist, die mit der Horizontalebene einen Winkel einschließen und einander etwa in der Mitte der Öffnung (33) im Melkstandboden (9) schneiden.

18. Vorrichtung nach Anspruch 17,
dadurch gekennzeichnet, daß das Anschlußglied (20) von einem ersten (14) und einem zweiten (17) Gestellteil abgestützt ist, und daß das erste Gestellteil (14) um eine erste Schwenkachse (15) und das zweite Gestellteil (17), mit dem das Anschlußglied (20) verbunden ist, in bezug auf das erste Gestellteil (14) um eine zweite Schwenkachse (18) schwenkbar ist.

19. Vorrichtung nach Anspruch 17 oder 18,
gekennzeichnet durch eine Einrichtung zum Verbringen des Anschlußgliedes (20) in eine vorgegebene Position durch Schwenken um die genannten Achsen (15, 18).

20. Vorrichtung nach Anspruch 19,
dadurch gekennzeichnet, daß die Einrichtung Schrittschaltmotoren aufweist.

21. Vorrichtung nach einem der Ansprüche 15 bis 20,
dadurch gekennzeichnet, daß das verschiebbare Teil axial gleitend durch ein Führungsteil (27) hindurchgeführt ist und nahe dem anderen Ende von einem Antriebsglied (28) zum Erzeugen der Axialbewegung erfaßt wird.

22. Vorrichtung nach Anspruch 21,
dadurch gekennzeichnet, daß das Antriebsglied (28) eine Gewindespindel-Einheit aufweist, deren Länge mittels eines elektrischen Signals steuerbar ist.

23. Vorrichtung nach Anspruch 22,
dadurch gekennzeichnet, daß die Verschiebung des verschieblichen Teiles mittels Hebelbetätigung eines Gestänges (29, 30) größer ist als die Längenänderung der Gewindespindel-Einheit.

24. Vorrichtung nach einem der vorhergehenden Ansprüche,
dadurch gekennzeichnet, daß eine oder mehrere Öffnungen (33) vorgesehen sind und sich durch jede dieser Öffnungen (33) hindurch ein Anschlußglied (20) erstrecken kann, und daß die Öffnungen in einem vom Boden (9) aus betrachtet erhabenen Teil vorgesehen sind, wobei das Tier mit seinen Hinterbeinen beiderseits des erhabenen Teiles steht.

25. Vorrichtung nach einem der vorhergehenden Ansprüche,
dadurch gekennzeichnet, daß ein Zitzenbecher (21) durch Entspannen des Verbindungsgliedes (38) in eine umgekehrte Position mit nach unten gerichteter Öffnung zu bringen ist.

26. Vorrichtung nach einem der vorhergehenden Ansprüche,
dadurch gekennzeichnet, daß der Milchschlauch (42) und der Pulsschlauch (41) mindestens teilweise koaxial liegen .

27. Vorrichtung nach den Ansprüchen 11 bis 26,
dadurch gekennzeichnet, daß das wulstartige Element (40) im wesentlichen kugelig ist.

## Revendications

1. Machine pour traire un animal (1), notamment une vache, pourvue de ventouses de trayon (21) et de moyens de positionnement et de fixation pour amener individuellement les ventouses de trayon jusqu'aux trayons respectifs du pis de l'animal et pour y fixer ensuite ces ventouses de trayon, les moyens de positionnement et de fixation comprenant pour chaque ventouse de trayon un moyen porteur (14, 17, 20) pour porter une ventouse de trayon et un moyen de déplacement (16, 19, 28) pour mouvoir automatiquement ladite ventouse jusqu'au trayon respectif, chaque moyen porteur comprenant un moyen de fixation (20) portant la ventouse de trayon respective, un organe de liaison flexible (38 ou 47) étant prévu pour chaque ventouse de trayon, chaque ventouse de trayon étant connectée aux moyens de positionnement et de fixation par l'organe de liaison flexible respectif afin de former une liaison flexible pendant la traite, un moyen d'entraînement (37) étant prévu pour chaque ventouse de trayon, ce moyen d'entraînement étant connecté à la ventouse de trayon respective par l'organe de liaison flexible (38), chaque moyen d'entraînement (37) étant, après l'attachement de la ventouse de trayon au trayon respectif, actionné pour détendre l'organe de liaison flexible afin de former ladite liaison flexible, de manière que chaque ventouse de trayon, pendant la traite, soit espacée à distance de l'organe de fixation, alors qu'après la traite, chaque moyen d'entraînement (37) est actionné pour tirer la ventouse de trayon respective par l'organe de liaison flexible vers et contre l'organe de fixation dans une position prédéterminée.

2. Machine selon la revendication 1, caractérisée en ce que l'organe de liaison (38) est relié par une de ses extrémités près de l'extrémité inférieure de la ventouse (21) et s'étend, par son autre extrémité, à travers une ouverture dans l'organe de fixation (20).

3. Machine selon la revendication 1 ou 2, caractérisée en ce que les moyens d'entraînement (37) sont munis d'un vérin pneumatique.

4. Machine selon la revendication 3, caractérisée en ce que le vérin pneumatique (37) peut se relier à la source de vide utilisée pour l'aspiration du lait.

5. Machine selon la revendication 3 ou 4, caractérisée en ce que les moyens d'entraînement (37) sont prévus dans l'organe de fixation (20).

6. Machine selon l'une quelconque des revendications précédentes, caractérisée en ce que l'organe de fixation (20) est muni d'un élément tubulaire, près d'une extrémité duquel une ventouse (21) est reliée au moyen de l'organe de liaison flexible (38).

7. Machine selon la revendication 6, caractérisée en ce que l'organe de liaison (38) est agencé à travers au moins une partie de l'élément tubulaire.

8. Machine selon la revendication 7, caractérisée en ce que les moyens d'entraînement (37) pour tirer l'organe de liaison (38) sont disposés au moins partiellement dans l'élément tubulaire.

9. Machine selon l'une quelconque des revendications précédentes, caractérisée en ce que les parties contiguës de la ventouse de trayon (21), d'une part, et l'organe de fixation (20), d'autre part, ont des formes complémentaires de telle manière que la ventouse (21) soit amenée en une position spécifique quand l'organe de liaison (38) est tiré.

10. Machine selon l'une quelconque des revendications précédentes, caractérisée en ce que, quand l'organe de liaison (38) est tiré, la ventouse (21) est pratiquement alignée avec une partie oblongue de l'organe de liaison (20), sur l'extrémité de cette partie.

11. Machine selon l'une quelconque des revendications précédentes, caractérisée en ce qu'il est disposé, autour de l'organe de liaison (38), entre la ventouse (21) et l'organe de fixation (20), un élément en forme de perle qui se loge dans un creux de forme correspondante entre la ventouse (21) et l'organe de fixation (20) quand l'organe de liaison (38) est tiré.

12. Machine selon l'une quelconque des revendications précédentes, caractérisée en ce que l'organe de liaison (38) est sous la forme d'une corde, par exemple en fil métallique et/ou en matériau synthétique.

13. Machine selon l'une quelconque des revendications précédentes, caractérisée en ce que l'organe de liaison (38) est formé par le tube (42) du lait et/ou par le tube de pulsation (41).

14. Machine selon l'une quelconque des revendications 6 à 13, caractérisée en ce que le tube (42) pour le lait et/ou le tube de pulsation (41) est/sont disposés dans l'élément 15 tubulaire.

15. Machine selon l'une quelconque des revendications précédentes, caractérisée en ce que l'organe de fixation (20) est muni d'une partie allongée, coulissante axialement, qui est déplacée de manière substantiellement axiale à partir d'une position sous le plancher (9) de la stalle de traite vers une position où ladite partie coulissante s'étend à travers une ouverture (33) du plancher jusqu'au-dessus de ce plancher (9) et près du pis d'un animal, la ventouse de trayon (21) étant reliée à une extrémité de ladite partie coulissante par l'organe de liaison (38).

16. Machine selon la revendication 15, caractérisée en ce que ladite partie coulissante a une configuration tubulaire.

17. Machine selon la revendication 15 ou 16, caractérisée en ce que l'organe de fixation (20) est supporté de manière articulée lui permettant de pivoter autour d'au moins deux axes (15, 18), lesquels axes (15, 18) forment un angle avec le plan horizontal et lesquels axes (15, 18) sont sensiblement intersécants dans la partie centrale de l'ouverture(33) dans le plancher (9) de la stalle de traite.

18. Machine selon la revendication 17, caractérisée en ce que l'organe de fixation (20) est supporté par une première partie (14) et par une deuxième partie (17) du châssis, ladite première partie (14) du châssis étant pivotante autour d'un premier axe (15) de pivotement, et ladite deuxième partie (17) du châssis, à laquelle est relié l'organe de fixation (20) étant articulée avec ladite première partie (14) du châssis autour d'un deuxième axe de pivotement (18).

19. Machine selon la revendication 17 ou 18, caractérisée par des moyens pour amener l'organe de fixation (20) en une position prédéterminée par pivotement autour desdits axes (15, 18).

20. Machine selon la revendication 19, caractérisée en ce que lesdits moyens comprennent des moteurs pas-à-pas.

21. Machine selon l'une des revendications 15 à 20, caractérisée en ce que la partie coulissante peut coulisser axialement à travers une partie (27) de guidage, et en ce que la partie coulissante est saisie près de l'autre extrémité par un organe d'entraînement (28) effectuant le mouvement axial.

22. Machine selon la revendication 21, caractérisée en ce que ledit organe d'entraînement (28) est pourvu d'une unité à vis sans fin dont la longueur peut être commandée au moyen d'un signal électrique.

23. Machine selon la revendication 22, caractérisée en ce que le déplacement de la partie coulissante au moyen de l'effet de levier d'un système à bielles (29, 30) est plus grand que le changement de longueur de l'unité à vis sans fin.

24. Machine selon l'une quelconque des revendications précédentes, caractérisée en ce qu'il est prévu une ou plusieurs ouvertures (33) à travers chacune desquelles peut s'étendre un organe de fixation (20), ces ouvertures étant disposées en position rehaussée par rapport au plancher (9), ce qui fait que l'animal se tient debout avec ses pattes postérieures de part et d'autre de ladite partie rehaussée.

25. Machine selon l'une quelconque des revendications précédentes, caractérisée en ce qu'une ventouse de trayon (21) est amenée en position renversée en ayant son ouverture dirigée vers le bas, en relâchant l'organe de liaison (38).

26. Machine selon l'une quelconque des revendications précédentes, caractérisée en ce que le tube à lait (42) et le tube de pulsation (41) sont dessinés au moins partiellement de manière coaxiale.

27. Machine selon les revendications 11 à 26, caractérisée en ce que l'élément en forme de perle (40) est substantiellement globulaire.
